# EUROPEAN PATENT SPECIFICATION

(11) **EP 2 610 029 B1**
(45) Date of publication and mention of the grant of the patent: **25.12.2019**
(21) Application number: 11843589.0
(22) Date of filing: 21.11.2011
(51) Int. Cl.: B23K 35/02, B32B 15/01, C21D 9/50, C22C 38/02, C22C 38/04, C22C 38/06, C22C 38/22, C22C 38/24, C22C 38/60, B23K 9/18, B23K 35/30, C22C 38/00, C22C 38/26

(54) **WELD METAL AND METHOD FOR SUBMERGED ARC WELDING**
SCHWEISSMETALL UND UNTERPULVERSCHWEISSVERFAHREN
MÉTAL DE SOUDURE ET PROCÉDÉ POUR LE SOUDAGE À L'ARC SUBMERGÉ

(30) Priority: 24.11.2010 JP 2010261806
(43) Date of publication of application: 03.07.2013
(73) Proprietor: Kabushiki Kaisha Kobe Seiko Sho, Chuo-ku Kobe-shi Hyogo 651-8585 (JP)
(72) Inventor: OTSU, Minoru, Kanagawa 251-0014 (JP); YAMASHITA, Ken, Kanagawa 251-0014 (JP); KOIKE, Hayato, Kanagawa 251-0014 (JP); TANIGUCHI, Genichi, Kanagawa 251-0014 (JP); TAKAUCHI, Hideaki, Kanagawa 251-0014 (JP); CHEN, Liang, Kanagawa 251-0014 (JP); SAKATA, Mikihiro, Kanagawa 251-0014 (JP)
(74) Representative: Müller-Boré & Partner Patentanwälte PartG mbB
(86) International application number: PCT/JP2011/076791
(87) International publication number: WO 2012/070524

(56) References cited:
- FR-A1- 2 939 340
- JP-A- 2 084 293
- JP-A- 6 328 292
- JP-A- 8 150 478
- JP-A- 9 192 881
- JP-A- S6 171 196
- JP-A- H03 258 490
- JP-A- 2009 106 949
- JP-A- 2009 106 949
- ICHIKAWA K ET AL: "TOUGHNESS AND CREEP STRENGTH OF MODIFIED 2.25CR-1MO STEEL WEL METAL", WELDING JOURNAL, AMERICAN WELDING SOCIETY, MIAMI, FL, US, vol. 74, no. 7, 1 July 1995 (1995-07-01), pages 230-S, XP000542810, ISSN: 0043-2296

## Description

The present invention relates to a weld metal for use with high-strength Cr-Mo steel, the weld metal being used for welding of high-strength Cr-Mo steel (Cr: 2.00 to 3.25 and Mo: 0.90 to 1.20), and being particularly effective for welding of high-strength Cr-Mo steel that contains V as an essential component in addition to Cr and Mo and further contains Nb, Ti, B, Ca, and the like as needed. The present invention also relates to a submerged arc welding method.

Since Cr-Mo steel that contains 2.25% to 3% by mass Cr and 1% by mass Mo has good high-temperature properties, it has been widely used as a material for use in a high-temperature and high-pressure environment, such as a boiler, a chemical reactor vessel, or the like. Since these structures are often large and thick-walled, submerged arc welding, which has high weld efficiency, is mostly employed for the welding of the structures. Furthermore, since higher-temperature and higher-pressure service conditions tend to be used in order to realize equipment operation with high efficiency, use of existing steel impractically requires the welded structures to have thicker walls. Accordingly, in order to prevent the structures from being thick-walled even under high-temperature and high-pressure conditions, high-strength Cr-Mo steel to which V is added or high-strength Cr-Mo steel to which V, Nb, and the like are added has come into practical use.

Welding materials have been also required to be superior to existing welding materials in terms of room-temperature strength, high-temperature strength, toughness, creep strength, temper embrittlement resistance (less embrittlement during use in a high-temperature environment), hot-cracking resistance (less cracking during solidification), cold-cracking resistance (resistant to occurrence of hydrogen delayed fracture), and SR-cracking resistance (resistant to occurrence of intercrystalline cracking due to precipitation and aging). PTLs 1 and 2 propose submerged arc welding methods for forming a weld metal that has the above-described properties.

FR 2 939 340 A1 discloses a submerged arc welding method for Cr-Mo-V steels using a welding wire in combination with a flux, wherein the welding wire has a composition consisting of, by weight, C: 0.05 to 0.15%, Mn: 0.4 to 1.3%, Si: 0.07 to 0.20%, Cr: 2 to 2.8%, Mo: 0.5 to 1.2%, Ni: 0.01 to 0.2%, S: 0.001 to 0.01%, P: 0.001 to 0.012%, Sb: 1 to 20 ppm, Pb: 0.01 to 3 ppm, Bi: 0.01 to 3 ppm, V: 0.10 to 0.35% with the balance being Fe and inevitable impurities. JP H03-258490 A discloses a submerged arc welding method for Cr-Mo low alloy steels using a wire, which contains, by weight, 0.05 to 0.15% C, 0.01 to 0.15% Si, 0.40 to 1.00% Mn, 1.80 to 3.80% Cr, and 0.80 to 1.30% Mo, and a baked flux containing 15 to 25% CaF₂, 3 to 10% metal carbonate in terms of CO₂, and 1.0 to 3.5% one or two or more kinds of Si, Mn and Al.
PTL 1: Japanese Unexamined Patent Application Publication No. 6-328292
PTL 2: Japanese Unexamined Patent Application Publication No. 9-192881

However, even in the case where welding is performed by the submerged arc welding methods disclosed in the above PTLs 1 and 2, sufficient properties have not yet been achieved in terms of satisfaction of recent requirements for improving the toughness of the weld metal at a lower temperature.

In view of the foregoing issues, an object of the present invention is to provide a weld metal for use with high-strength Cr-Mo steel, the weld metal having stable, high toughness and high SR-cracking resistance, and a submerged arc welding method for forming the weld metal.

The weld metal according to the present invention is a weld metal obtained by performing submerged arc welding, the weld metal having a composition consisting of:
C: 0.05% to 0.15% by mass;
Si: 0.10% to 0.25% by mass;
Mn: 0.50% to 1.30% by mass;
Cr: 2.00% to 3.25% by mass;
Mo: 0.90% to 1.20% by mass;
V: 0.20% to 0.40% by mass;
Nb: 0.010% to 0.040% by mass;
O: 250 to 450 ppm;
Al: 0.040% by mass or less;
P: 0.010% by mass or less;
S, Sn, Sb, and As: each 0.010% by mass or less; and
Bi and Pb: each 1.0 ppm or less,
with the balance being Fe and inevitable impurities. In the microstructure, the ratio of crystal grains with a particle surface area of 400 µm² or less relative to all crystal grains is 70% or more.

The submerged arc welding method according to the present invention includes performing submerged arc welding using a welding wire in combination with a flux under the following welding conditions: an amount of welding heat input controlled to be in the range of 20 to 50 kJ/cm and a build-up thickness (mm) per layer controlled to be 0.15 times or less the amount of heat input (kJ/cm). The welding wire has a composition consisting of
C: 0.09% to 0.19% by mass,
Si: 0.30% by mass or less,
Mn: 0.50% to 1.40% by mass,
Cr: 2.00% to 3.80% by mass,
Mo: 0.90% to 1.20% by mass,
V: 0.25% to 0.45% by mass, and
Nb: 0.010% to 0.040% by mass,
with the balance being Fe and inevitable impurities. The flux contains a carbonate in an amount of 3.0% to 12.0% by mass in terms of CO₂.

A weld metal according to the present invention has stable, high toughness, and high SR-cracking resistance and is excellent in terms of welding usability in the welding of stainless steel.
[Fig. 1] Fig. 1 is a diagram illustrating a groove shape.
[Fig. 2] Fig. 2 is a temperature diagram for describing a method of PWHT.
[Fig. 3] Fig. 3 is a diagram for describing a step cooling method of a deposited metal.
[Fig. 4] Figs. 4(a) to 4(e) are diagrams for describing a method for sampling a cylindrical test specimen.

Hereafter, the present invention will be described in detail. In the 1990s, when high-strength Cr-Mo steel came into practical use, an impact value (vE-18°C) of 55 J or more at -18°C was generally required for high-strength Cr-Mo steel in terms of toughness. However, recently, an impact value (vE-30°C) of 55 J or more at -30°C has been required. That is, improvement in the impact property at a lower temperature has been required.

In order to satisfy such a requirement for improvement in low-temperature impact property, the improvement in the low-temperature toughness of a weld metal was attempted by adjusting the composition of the weld metal. Although the object was averagely attained, there were sometimes the cases where significantly low toughness was observed. In the toughness evaluation of the weld metal, where N = 3 to 5 test pieces for each temperature were successively sampled from test pieces that had been welded and used in the test, there were a large number of cases where all of the test pieces, or, in many cases, one or two test pieces had significantly low toughness and thereby failed to meet the required specifications.

As a result of a comparative study between test pieces that had high toughness and test pieces that had a low value, although no difference in chemical components was confirmed, it turned out that the difference between the test pieces that had high toughness and the test pieces that had low toughness could be classified on the basis of the fineness of the microstructure. Specifically, it turned out that the test pieces that had low toughness always had a microstructure that mainly included an as casted zone. It is considered that coarse grains of the as casted zone cause the toughness to be unstable.

Accordingly, a study on the stabilization of the toughness by forming a weld metal of a reheated zone that mainly includes fine grains was conducted. However, the stabilization could not be attained only by adjusting components of the weld metal. Since thick plates with a thickness of several tens of millimeters to several hundred millimeters are used for structures in which high-strength Cr-Mo steel is used, multilayer welding is employed even in the case of submerged arc welding (SAW). Therefore, another study was conducted from the aspect of the welding procedure. As a result, by controlling the build-up thickness per layer, during the welding of a layer, an effect of reheating the previous layer was produced and thereby a weld metal that mainly includes a reheated zone was formed. In addition, although it has been generally considered that it is effective to reduce the weld heat input and increase the cooling rate in order to reduce the grain size in a microstructure, the inventors of the present invention have found those to be still insufficient. Even in the case of low heat input, for example, when welding was performed under high-current low-voltage conditions, there were the cases where the layer thickness was increased due to deep penetration or the like and thus sufficient reheating caused by the following layer was not provided, which resulted in coarse grains remaining. In contrast, it was confirmed that, even in the case of high heat input, when welding was performed so that the penetration was shallow and a certain layer thickness was maintained, grains were sufficiently reduced in size by reheating caused by the following layer.

A study on the definition of fine grains and on the effect of the distribution of fine grains on the toughness was also conducted. The study was conducted on the basis of the method for measuring crystal grains in accordance with ASTM E112, JIS G0551, and the like. As a result, it was found effective to specify the area of the reheated zone, that is, a fine-grain zone, by defining the crystal grain area of the reheated zone, that is, the fine-grain zone, to be 400 µm² or less. In the experimental studies conducted by the inventors of the present invention, it was difficult to attain a fine-grain proportion of 100% in the actual welding procedure. However, the inventors of the present invention found that the toughness was stable even in the case where a certain proportion of coarse grains were mixed. Therefore, the region including fine grains was defined as a region that has a crystal grain area of 400 µm² or less. Furthermore, the range of the fine-grain proportion in which stabilization and improvement in toughness are attained was confirmed.

Hereafter, the reasons for the addition of components, the limitations on the composition, and the limitations on values of crystal grains according to the present invention will be described.
(A) First, the reasons for the limitation on chemical components of a solid wire will be described.

### "C: 0.09% to 0.19% by mass"

C is added in order to maintain the room-temperature strength, high-temperature strength, creep strength, and toughness of a weld metal. In order to set the C content of the weld metal to be 0.05% to 0.15% by mass, the C content of the solid wire needs to be restricted. Thus, the C content of the solid wire is set to be 0.09% to 0.19% by mass.

### "Si: 0.30% by mass or less"

Si has a deoxidation effect and a function of controlling the O content, which plays an important part in the present invention. Since the Si content of the weld metal needs to be 0.10% to 0.25% by mass, the Si content of the solid wire is set to be 0.30% by mass or less.

### "Mn: 0.50% to 1.40% by mass"

As with Si, Mn also has a deoxidation effect and a function of controlling the O content, which plays an important part in the present invention. In addition, Mn improves the high-temperature strength and toughness. Accordingly, the Mn content of the weld metal needs to be 0.50% to 1.30% by mass. Thus, in consideration of the yield in the weld metal, the Mn content of the solid wire is set to be 0.50% to 1.40% by mass.

### "Cr: 2.00% to 3.80% by mass and Mo: 0.90% to 1.20% by mass"

Cr and Mo are fundamental components of high-strength 2.25% Cr-1% Mo steel. Certain amounts of Cr and Mo need to be added as base metal components of the weld metal from the solid wire. Specifically, even when the Cr content of the solid wire is less than 2.00% by mass or more than 3.80% by mass, or even when the Mo content of the solid wire is less than 0.90% by mass or more than 1.20% by mass, the effect according to the present invention is exhibited. However, the components of the resulting weld metal are in the range of base metal components that are not actually used in the intended high-temperature environment. Thus, the Cr content of the solid wire is set to be 2.00% to 3.80% by mass. The Mo content of the solid wire is set to be 0.90% to 1.20% by mass.

### "V: 0.25% to 0.45% by mass and Nb: 0.010% to 0.040% by mass"

V has an effect of enhancing the room-temperature strength, high-temperature strength, and creep strength of the weld metal. In order to set the V content of the weld metal to be 0.20% to 0.40% by mass, the V content of the solid wire needs to be 0.25% to 0.45% by mass. Nb has the same effect as V. In order to set the Nb content of the weld metal to be 0.010% to 0.040% by mass, the Nb content of the solid wire needs to be 0.010% to 0.040% by mass.

(B) Next, the reasons for the limitation on the chemical components of a flux will be described.

### "Metal carbonate (in terms of CO₂): 3% to 12% by mass"

CO₂ derived from a metal carbonate has an effect of improving cold-cracking resistance by reducing the content of diffusible hydrogen in the weld metal and an effect of controlling the O content. In order to produce such an effect, the content of metal carbonate in terms of CO₂ needs to be
3% or more by mass. However, when the content of metal carbonate in terms of CO₂ exceeds 12% by mass, the O content of the weld metal exceeds the upper limit of the range specified in the present invention and the toughness is reduced. Thus, the content of metal carbonate in terms of CO₂ is set to be 3% to 12% by mass. Examples of the metal carbonate include CaCO₃, BaCO₃, and MgCO₃, all of which have the same effect as long as the content thereof in terms of CO₂ falls within the above-described range.

(C) Next, the reasons for the limitation on the welding conditions will be described. "Welding heat input: 20 to 50 kJ/cm"

The inventors of the present invention have found that the adequate selection of a welding heat input leads to the formation of a weld metal that has a good strength, temper property, hot-cracking resistance, and cold-cracking resistance in a balanced manner. At a welding heat input of less than 20 kJ/cm, the quench hardening property excessively increases, which improves strength but decreases the toughness and SR-cracking resistance. A welding heat input exceeding 50 kJ/cm results in increase in the oxygen content of the weld metal and degradation of the quenching property, which coarsens a microstructure and degrades strength, toughness, and temper embrittlement resistance.

### "Build-up thickness (mm) per layer being 0.15 times or less amount of heat input (kJ/cm)"

The inventors of the present invention have found that controlling a build-up thickness per layer at the time of welding a weld metal that has a composition adjusted to be within the following range allows the number of coarse grains in an as casted zone to be significantly reduced by reheating, which results in formation of a microstructure that has stable toughness and mainly includes fine grains. When the maximum layer thickness (mm) is assumed to be 0.15 times the amount of welding heat input calculated in units of kJ/cm, at a build-up thickness exceeding the maximum layer thickness of each welding heat input, the reheating effect caused by the following layer becomes insufficient, which prevents the formation of a microstructure with sufficiently fine grains and results in unstable toughness. Preferably, the build-up thickness (mm) is in the following range: Build-up thickness (mm) ≤ heat input (kJ/cm) × 0.12. Within the range, of the impact test pieces N = 3 to 5, almost no test pieces show an extraordinarily low value.

(D) Next, the reasons for the limitations on the composition and microstructure of the weld metal will be described.

### "C: 0.05% to 0.15% by mass"

Generally, a high O content of the weld metal results in significant decreases in the high-temperature strength, creep strength, and toughness. In particular, the decreases are significant when the O content of the weld metal is 0.025% by mass or more. Through the study conducted by the inventor of the present invention, it was found that setting the C content of the weld metal to be 0.05% to 0.15% by mass significantly improves these properties. However, a C content of the weld metal of less than 0.05% by mass results in insufficient strength and toughness, and a C content exceeding 0.15% by mass results in an excessively high strength and a reduction in toughness. Thus, the C content of the weld metal is set to be 0.05% to 0.15% by mass.

### "Si: 0.10% to 0.25% by mass"

Si has a deoxidation effect and a function of controlling the O content. In order to exhibit such effects, the Si content of the weld metal needs to be 0.10% by mass or more. However, a Si content exceeding 0.25% by mass results in degradations of temper embrittlement resistance and SR-cracking resistance and also results in an excessively high strength, which causes a reduction in toughness. Thus, the Si content of the weld metal is set to be 0.10% to 0.25% by mass.

### "Mn: 0.50% to 1.30% by mass"

As with C, Mn has an effect of improving high-temperature strength and toughness. In addition, Mn has a deoxidation effect and a function of controlling the O content. However, a Mn content of less than 0.50% results in insufficient strength and toughness. A Mn content exceeding 1.30% by mass results in a reduction in creep strength and degradation of temper embrittlement resistance. Thus, the Mn content of the weld metal is set to be 0.50% to 1.30% by mass.

### "Cr: 2.00% to 3.25% by mass and Mo: 0.90% to 1.20% by mass"

Cr and Mo are fundamental components of high-strength (2.25% to 3% by mass) Cr-1% by mass Mo steel. When the Cr content of the weld metal is less than 2.00% by mass or more than 3.25% by mass, or when the Mo content of the weld metal is less than 0.90% by mass or more than 1.20% by mass, the effect of the present invention is exhibited. However, these are in the range of base metal components that are not actually used in the intended high-temperature environment. Thus, the Cr content of the weld metal is set to be 2.00% to 3.25% by mass. The Mo content of the weld metal is set to be 0.90% to 1.20% by mass.

### "V: 0.20 to 0.40 by mass"

V is one of elements that increase the Cr activity and reduce the C activity. V also has an effect of suppressing the precipitation of cementite. However, at a V content exceeding 0.40% by mass, a large amount of MC carbide precipitates, which results in a reduction in toughness. At a V content of less than 0.20%, the creep strength decreases. Thus, the V content of the weld metal is set to be 0.20% to 0.40% by mass.

### "Nb: 0.010% to 0.040% by mass"

Compared with the case where V is added alone, Nb has an effect of further improving the room-temperature strength, high-temperature strength, and creep strength. However, at a Nb content of less than 0.010% by mass, the effect is insufficient. At a Nb content exceeding 0.040% by mass, the strength excessively increases, which causes a reduction in toughness. Thus, the Nb content of the weld metal is set to be 0.010% to 0.040% by mass.

### "Al: 0.040% by mass or less"

Al has a function of reducing the toughness. When the Al content of the weld metal exceeds 0.040% by mass, a reduction in toughness becomes significant. Thus, the upper limit of the Al content of the weld metal is set to be 0.040% by mass.

### "P: 0.010% by mass or less"

P is an element that segregates in grain boundaries and reduces grain boundary strength. When the P content of the weld metal exceeds 0.010% by mass, the grain boundary strength decreases and the SR cracking is highly likely to occur. In addition, the segregation of P in the grain boundaries results in the degradation of the temper embrittlement resistance. Thus, the P content of the weld metal is set to be 0.010% by mass or less.

### "S, Sn, Sb, and As: each 0.010% by mass or less"

Examples of elements that are inevitably mixed into the weld metal include S, Sn, Sb, and As in addition to P, Al, and O. A high content of these elements results in the occurrence of SR cracking and temper embrittlement. Thus, the contents of S, Sn, Sb, and As are each set to be 0.010% by mass.

### "Bi and Pb: each 1.0 ppm or less"

Examples of elements that are inevitably mixed into the weld metal also include Bi and Pb. Even a trace amount of these elements cause a significant degradation of SR-cracking resistance. Thus, the Bi and Pb contents of the weld metal are each set to be 1.0 ppm or less.

### "O: 250 to 450 ppm"

O forms metal oxides in the weld metal and serves as a core of a crystal grain. At an O content of less than 250 ppm, the amount of generated metal oxide is small and consequently the number of crystal grains is small, which causes the grains to grow coarse, and thereby the toughness is reduced. At an O content exceeding 450 ppm, the number of oxides as nonmetal inclusions are excessively large, which results in a reduction in toughness. Thus, the O content of the weld metal is set to be 250 to 450 ppm. Preferably, the O content of the weld metal is set to be 300 to 400 ppm. "In the microstructure, the ratio of crystal grains with a particle surface area of 400 µm² or less relative to all crystal grains is 70% or more"

It was found that, when the proportion of the crystal grains with a particle surface area of 400 µm² or less, which are defined as fine grains, is less than 70% in the microstructure, in at least 1 or 2 out of N = 6 impact tests, a low impact value (vE-30°C) of less than 54 J at -30°C was observed. Thus, in the microstructure, the ratio of crystal grains with a particle surface area of 400 µm² or less relative to all crystal grains is 70% or more. Preferably, the ratio of crystal grains with a particle surface area of 400 µm² or less relative to all crystal grains is 90% or more. In this case, the toughness remains stable at a high value. By adjusting the O content of the weld metal to be 250 to 450 ppm within the composition range of the weld metal specified in the present invention, the fine-grain proportion could be maintained to be 70% or more, and each low-temperature impact value at -30°C (vE-30°C) could exceed 46 J with certainty. Furthermore, by adjusting the O content to be 300 to 400 ppm and the layer thickness depending on welding conditions, the fine-grain proportion could be 90% or more and each impact energy (vE-30°C) could exceed 55 J, which are high, stable values.

### EXAMPLES

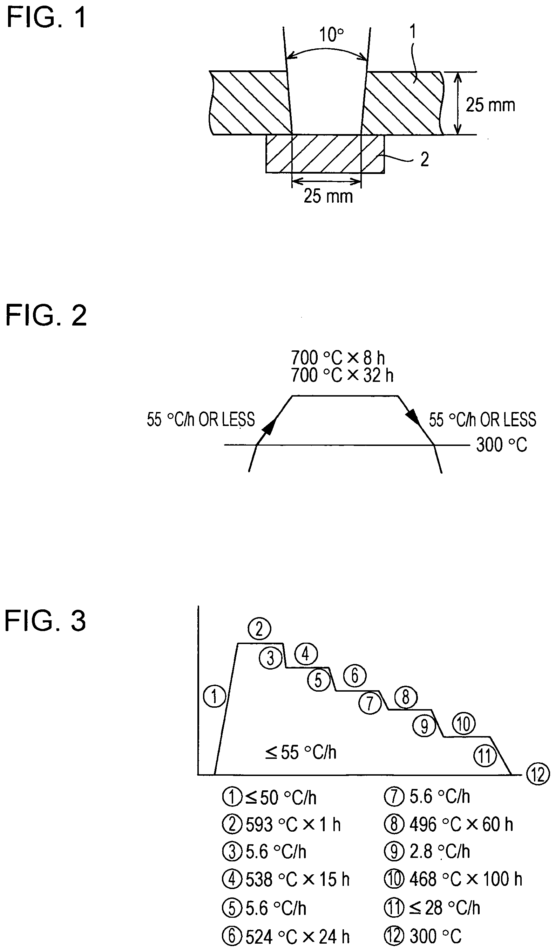

The Examples of the present invention will be described in comparison with Comparative Examples, which are outside the scope of the present invention. The base metal described in Table 1 below was processed into a test plate by forming a groove shape between a material to be welded 1 so as to have a groove angle of 10° and a root gap of 25 mm as shown in Fig. 1. A backing material 2 was disposed at the bottom of the groove. Welding was performed under the welding conditions described in Table 4 below using a solid wire that has a composition described in Table 2 below and a flux that has a composition described in Table 3 below in combination. After welding, two levels of PWHTs shown in Fig. 2 were performed. Test pieces that were to be subjected to a temper embrittlement property evaluation test were subjected to step cooling shown in Fig. 3. Mechanical tests were performed on a deposited metal in the following manner described in Table 5.

**[Table 1]**

| | Composition of steel plate under test (% by mass) | | | | | | | | | |
|---|---|---|---|---|---|---|---|---|---|---|
| | C | Si | Mn | P | S | Cr | Mo | V | Nb | Fe |
| P1 | 0.11 | 0.08 | 0.56 | 0.004 | 0.002 | 2.41 | 0.98 | 0.31 | 0.025 | Balance |
| P2 | 0.10 | 0.08 | 0.55 | 0.004 | 0.002 | 3.05 | 1.05 | 0.29 | 0.027 | Balance |

**[Table 2]**

| | | C | Si | Mn | Cr | Mo | V | Nb | Others |
|---|---|---|---|---|---|---|---|---|---|
| Example | W1 | 0.16 | 0.15 | 1.08 | 2.52 | 1.00 | 0.38 | 0.030 | Al: 0.12 |
| | W2 | 0.12 | 0.21 | 1.25 | 2.58 | 1.05 | 0.38 | 0.021 | |
| | W3 | 0.17 | 0.16 | 1.13 | 2.52 | 1.02 | 0.38 | 0.030 | Al: 0.12 |
| | W4 | 0.14 | 0.18 | 1.13 | 3.20 | 0.98 | 0.38 | 0.012 | |
| Comparative Example | W5 | 0.07 | 0.20 | 1.21 | 2.55 | 1.04 | 0.38 | 0.028 | |
| Example | W6 | 0.09 | 0.21 | 1.26 | 2.57 | 1.05 | 0.38 | 0.023 | |
| | W7 | 0.19 | 0.21 | 1.28 | 2.60 | 1.03 | 0.38 | 0.020 | |
| Comparative Example | W8 | 0.21 | 0.19 | 1.23 | 2.54 | 1.04 | 0.38 | 0.024 | |
| Example | W9 | 0.12 | 0.11 | 1.30 | 2.56 | 1.00 | 0.38 | 0.025 | |
| | W10 | 0.13 | 0.23 | 0.51 | 2.58 | 1.04 | 0.38 | 0.022 | |
| Comparative Example | W11 | 0.14 | 0.22 | 1.27 | 2.59 | 1.02 | 0.22 | 0.024 | |
| Example | W12 | 0.13 | 0.20 | 1.25 | 2.60 | 1.03 | 0.25 | 0.020 | |
| | W13 | 0.14 | 0.22 | 1.31 | 2.61 | 1.04 | 0.44 | 0.023 | |
| Comparative Example | W14 | 0.14 | 0.24 | 1.28 | 2.57 | 1.03 | 0.46 | 0.020 | |
| Example | W15 | 0.12 | 0.20 | 1.22 | 2.59 | 1.06 | 0.38 | 0.040 | |
| Comparative Example | W16 | 0.13 | 0.25 | 1.26 | 2.55 | 1.04 | 0.38 | 0.045 | |
| | W17 | 0.12 | 0.24 | 1.26 | 2.55 | 1.05 | 0.38 | 0.023 | P: 0.012 |
| | W18 | 0.12 | 0.23 | 1.22 | 2.56 | 1.05 | 0.38 | 0.019 | S: 0.015 |
| | W19 | 0.12 | 0.22 | 1.25 | 2.60 | 1.02 | 0.38 | 0.020 | Sn: 0.011 |
| | W20 | 0.12 | 0.21 | 1.23 | 2.58 | 1.05 | 0.38 | 0.020 | Sb: 0.011 |
| | W21 | 0.12 | 0.23 | 1.24 | 2.59 | 1.06 | 0.38 | 0.022 | As: 0.011 |

**[Table 3]**

| | | Metal carbonate | | | Amount added (ppm) less than 1.0 ppm is below the detection limit | |
|---|---|---|---|---|---|---|
| | | Type | Content | Content in terms of CO₂ | Bi | Pb |
| Example | F1 | CaCO₃ | 10 | 4.4 | - | - |
| | F2 | BaCO₃ | 16 | 3.6 | - | - |
| | F3 | CaCO₃ | 16 | 7.0 | - | - |
| | F4 | CaCO₃ | 26 | 11.4 | - | - |
| Comparative Example | F5 | CaCO₃ | 6 | 2.6 | - | - |
| | F6 | CaCO₃ | 30 | 13.2 | - | - |
| | F7 | CaCO₃ | 16 | 7.0 | 2.2 | - |
| | F8 | CaCO₃ | 16 | 7.0 | - | 1.9 |

**[Table 4]**

| | | Welding conditions | | | | | | |
|---|---|---|---|---|---|---|---|---|
| | | Polarity | Current (A) | Voltage (V) | Welding speed (cm/min) | Heat input (kJ/cm) | Heat input × 0.15 (× 0.13) | Build-up thickness (mm) |
| Comparative Example | Y1 | DCEP | 500 | 28 | 50 | 16.8 | 2.5 (2.2) | 2.7 |
| Comparative Example | Y2 | AC | 525 | 29 | 50 | 18.3 | 2.7 (2.4) | 2.7 |
| Example | Y3 | DCEP | 500 | 28 | 40 | 21.0 | 3.2 (2.7) | 2.7 |
| Example | Y4 | AC | 550 | 31 | 40 | 25.6 | 3.8 (3.3) | 3.5 |
| Example | Y5 | AC | 650 | 35 | 30 | 45.5 | 6.8 (5.9) | 4.1 |
| Comparative Example | Y6 | AC | 700 | 36 | 30 | 50.4 | 7.6 (6.6) | 4.1 |

**[Table 5]**

| Test details | | PWHT (°C × h) | Location of test specimen | Test specimen |
|---|---|---|---|---|
| Tensile test | Room temperature | 700 × 32 | Center of plate thickness | JIS Z3111 No. A1 |
| | 454°C | 700 × 32 | | JIS G0567 (Diameter: 6 mm) |
| Charpy impact test | | 700 × 8 | | JIS Z3111 No. 4 |
| Temper embrittlement test | | 700 × 8 + Step Cooling | | JIS Z3111 No. 4 |
| Creep rupture test | | 700 × 32 | | JIS Z2273 (Diameter: 6 mm) |

Of the test pieces that had been heat-treated under the two levels of PWHT (post-weld heat treatment) conditions, the test pieces that had been heat-treated for a longer period of time (32 h) were subjected to a tensile test and a creep rupture test. Regarding the strength, an evaluation of "Good" was given when the room-temperature tensile strength was 585 to 760 MPa (PWHT 700°C × 32 h) in order to reach the target of having a strength equal to ASTM A542 Type D Class 4A. Regarding the high-temperature (454°C) tensile strength, an evaluation of "Good" was given when 460 MPa (PWHT 700°C × 32 h) or more was measured. Regarding the creep rupture test, an evaluation of "Good" was given when the unruptured time was 900 h or more under load conditions of 210 MPa at 540°C in accordance with the standard of ASME Sec VIII. The maximum testing time was 2000 h.

The test pieces that had been subjected to PWHT for a shorter period of time (8 h) were subjected to microstructure observation and a toughness and temper embrittlement property evaluation test. In the microstructure observation, cold cracks were observed and the fine-grain proportion was also determined. The test pieces were etched with nital and then the microstructures were observed using an optical microscope with an image processing system. The proportion of grains having a certain size was automatically measured using software for measuring crystal grain size conforming to JIG G0551 and ASTM E112. Regarding the toughness, which is normally measured with N = 3, the toughness was measured with N = 6 in order to confirm the stability. An evaluation of "Good" was given when the impact value (vE-30°C) was 55 J on average and 46 J at minimum. Regarding the temper embrittlement property, an evaluation of "Good" was given when vTr55 (a Charpy transition temperature indicating 55 J) and ΔvTr55 (a transition amount of vTr55 after step-cooling) satisfied vTr55 + 3.0ΔvTr55 ≤ 0°C.

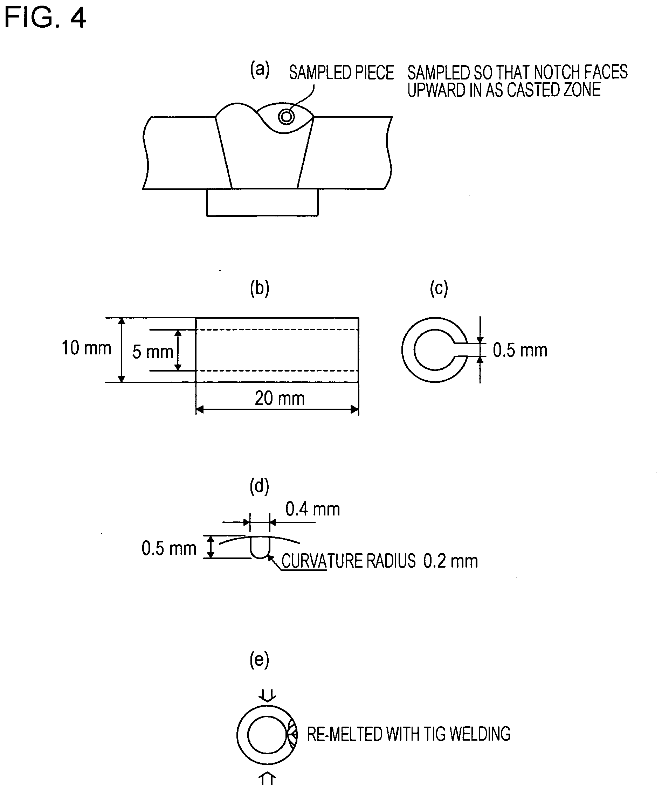

Regarding the SR cracking resistance evaluation method, with reference to "Study on stress relief annealing cracking (Second Report)" (Kiuchi, et al., Journal of the Japan Welding Society, Vol. 33, No. 9 (1964), p. 718), a cylindrical test specimen was sampled as shown in Fig. 4, re-melted with TIG welding while being subjected to bending stress, and heat-treated at 625°C for 10 hours with residual tensile stress applied to a U-shaped notch portion. An evaluation of "Good" was given when no cracks were observed at the bottom of the U-shaped notch portion.

Since the content of inevitable impurities such as P, S, Sn, Sb, and As added from the wire is substantially constant and stable at a low value; it is considered to be practically meaningless to specify the upper limit. However, since the addition of the impurities through the flux and the like was anticipated, the limitation on the weld metal was given. Since the addition through the flux was difficult during the tests in Examples, the addition was performed through the wire. Bi and Pb were added through the flux since proper raw materials were available.

The test results are described in Tables 6 to 9 below.

**[Table 6]**

| Group | No. | Wire | Flux | Steel plate | Welding conditions | Deposited metal chemical compositions (% by mass) | | | | | | |
|---|---|---|---|---|---|---|---|---|---|---|---|---|
| | | | | | | C | Si | Mn | Cr | Mo | V | Nb |
| | 1 | W2 | F2 | P1 | Y4 | 0.08 | 0.24 | 1.30 | 2.45 | 0.99 | 0.34 | 0.015 |
| | 2 | W2 | F4 | P1 | Y4 | 0.08 | 0.18 | 1.19 | 2.41 | 1.04 | 0.33 | 0.016 |
| | 3 | W3 | F3 | P1 | Y3 | 0.08 | 0.18 | 1.19 | 2.52 | 1.03 | 0.34 | 0.016 |
| | 4 | W6 | F2 | P1 | Y4 | 0.05 | 0.20 | 1.22 | 2.49 | 1.02 | 0.34 | 0.015 |
| | 5 | W7 | F1 | P1 | Y4 | 0.15 | 0.17 | 1.13 | 2.47 | 1.03 | 0.34 | 0.017 |
| | 6 | W9 | F1 | P1 | Y4 | 0.06 | 0.10 | 1.25 | 2.49 | 1.00 | 0.34 | 0.013 |
| | 7 | W10 | F3 | P1 | Y4 | 0.07 | 0.19 | 0.50 | 2.47 | 1.02 | 0.34 | 0.015 |
| Example | 8 | W12 | F3 | P1 | Y4 | 0.08 | 0.19 | 1.12 | 2.51 | 1.02 | 0.20 | 0.013 |
| | 9 | W13 | F3 | P1 | Y4 | 0.08 | 0.18 | 1.15 | 2.52 | 1.03 | 0.39 | 0.014 |
| | 10 | W4 | F3 | P2 | Y4 | 0.09 | 0.15 | 1.11 | 3.14 | 1.00 | 0.34 | 0.011 |
| | 11 | W15 | F1 | P1 | Y4 | 0.06 | 0.19 | 1.12 | 2.51 | 1.05 | 0.34 | 0.04 |
| | 12 | W1 | F3 | P1 | Y3 | 0.08 | 0.15 | 0.82 | 2.44 | 1.04 | 0.32 | 0.018 |
| | 13 | W2 | F3 | P1 | Y5 | 0.08 | 0.20 | 1.18 | 2.45 | 1.02 | 0.34 | 0.015 |
| | 14 | W1 | F3 | P1 | Y1 | 0.08 | 0.19 | 1.20 | 2.34 | 1.03 | 0.34 | 0.014 |
| | 15 | W2 | F2 | P1 | Y2 | 0.08 | 0.18 | 1.18 | 2.50 | 1.02 | 0.34 | 0.013 |
| | 16 | W2 | F2 | P1 | Y6 | 0.08 | 0.17 | 1.15 | 2.45 | 1.02 | 0.34 | 0.015 |
| | 17 | W2 | F7 | P1 | Y4 | 0.08 | 0.18 | 1.16 | 2.49 | 1.03 | 0.34 | 0.014 |
| | 18 | W2 | F8 | P1 | Y4 | 0.08 | 0.19 | 1.13 | 2.47 | 1.04 | 0.34 | 0.015 |
| | 19 | W2 | F5 | P1 | Y4 | 0.09 | 0.38 | 1.41 | 2.28 | 1.01 | 0.31 | 0.021 |
| | 20 | W2 | F6 | P1 | Y4 | 0.08 | 0.16 | 1.07 | 2.21 | 1.01 | 0.31 | 0.014 |
| | 21 | W3 | F5 | P1 | Y3 | 0.08 | 0.19 | 1.17 | 2.51 | 1.02 | 0.34 | 0.016 |
| Comparative Example | 22 | W5 | F2 | P1 | Y4 | 0.03 | 0.21 | 1.20 | 2.51 | 1.03 | 0.34 | 0.016 |
| | 23 | W8 | F1 | P1 | Y4 | 0.18 | 0.17 | 1.14 | 2.45 | 1.04 | 0.34 | 0.016 |
| | 24 | W9 | F4 | P1 | Y5 | 0.06 | 0.08 | 1.07 | 2.40 | 1.00 | 0.33 | 0.011 |
| | 25 | W10 | F6 | P1 | Y5 | 0.07 | 0.16 | 0.45 | 2.45 | 1.02 | 0.34 | 0.013 |
| | 26 | W11 | F3 | P1 | Y4 | 0.08 | 0.18 | 1.18 | 2.48 | 1.04 | 0.18 | 0.016 |
| | 27 | W14 | F3 | P1 | Y4 | 0.08 | 0.18 | 1.16 | 2.53 | 1.02 | 0.42 | 0.012 |
| | 28 | W4 | F6 | P2 | Y4 | 0.08 | 0.15 | 1.08 | 3.08 | 1.01 | 0.33 | 0.005 |
| | 29 | W16 | F1 | P1 | Y4 | 0.07 | 0.23 | 1.13 | 2.46 | 1.04 | 0.34 | 0.043 |
| | 30 | W17 | F3 | P1 | Y4 | 0.07 | 0.19 | 1.18 | 2.49 | 1.03 | 0.34 | 0.015 |
| | 31 | W18 | F3 | P1 | Y4 | 0.08 | 0.16 | 1.12 | 2.49 | 1.01 | 0.34 | 0.014 |
| | 32 | W19 | F3 | P1 | Y4 | 0.08 | 0.16 | 1.14 | 2.49 | 1.03 | 0.34 | 0.018 |
| | 33 | W20 | F3 | P1 | Y4 | 0.08 | 0.18 | 1.15 | 2.49 | 1.03 | 0.34 | 0.011 |
| | 34 | W21 | F3 | P1 | Y4 | 0.08 | 0.17 | 1.16 | 2.49 | 1.05 | 0.34 | 0.013 |

**[Table 7]**

| Group | No. | Deposited metal chemical compositions (% by mass) | | | | | | | | |
|---|---|---|---|---|---|---|---|---|---|---|
| | | Al | P | S | Sn | Sb | As | Bi | Pb | O |
| | 1 | 0.006 | 0.005 | 0.002 | 0.002 | 0.003 | 0.003 | - | - | 260 |
| | 2 | 0.005 | 0.004 | 0.002 | 0.002 | 0.002 | 0.003 | - | - | 430 |
| | 3 | 0.038 | 0.004 | 0.002 | 0.002 | 0.002 | 0.003 | - | - | 280 |
| | 4 | 0.006 | 0.005 | 0.002 | 0.002 | 0.002 | 0.002 | - | - | 390 |
| | 5 | 0.006 | 0.005 | 0.002 | 0.002 | 0.002 | 0.002 | - | - | 320 |
| | 6 | 0.004 | 0.005 | 0.002 | 0.002 | 0.002 | 0.002 | - | - | 400 |
| | 7 | 0.004 | 0.006 | 0.002 | 0.002 | 0.002 | 0.002 | - | - | 410 |
| Example | 8 | 0.006 | 0.005 | 0.002 | 0.002 | 0.003 | 0.002 | - | - | 350 |
| | 9 | 0.006 | 0.004 | 0.002 | 0.002 | 0.002 | 0.002 | - | - | 350 |
| | 10 | 0.006 | 0.005 | 0.002 | 0.002 | 0.001 | 0.002 | - | - | 400 |
| | 11 | 0.006 | 0.006 | 0.003 | 0.002 | 0.002 | 0.001 | - | - | 310 |
| | 12 | 0.029 | 0.006 | 0.001 | 0.002 | 0.001 | 0.003 | - | - | 340 |
| | 13 | 0.005 | 0.004 | 0.003 | 0.002 | 0.002 | 0.002 | - | - | 390 |
| | 14 | 0.031 | 0.002 | 0.002 | 0.002 | 0.002 | 0.003 | - | - | 380 |
| | 15 | 0.007 | 0.005 | 0.003 | 0.002 | 0.001 | 0.001 | - | - | 340 |
| | 16 | 0.006 | 0.004 | 0.002 | 0.002 | 0.002 | 0.003 | - | - | 400 |
| | 17 | 0.006 | 0.005 | 0.002 | 0.002 | 0.002 | 0.003 | 2.1 | - | 320 |
| | 18 | 0.006 | 0.005 | 0.003 | 0.002 | 0.003 | 0.003 | - | 1.9 | 340 |
| | 19 | 0.004 | 0.003 | 0.002 | 0.002 | 0.002 | 0.002 | - | - | 180 |
| | 20 | 0.004 | 0.004 | 0.002 | 0.002 | 0.002 | 0.003 | - | - | 470 |
| | 21 | 0.041 | 0.005 | 0.002 | 0.002 | 0.002 | 0.003 | - | - | 240 |
| | 22 | 0.005 | 0.005 | 0.002 | 0.002 | 0.002 | 0.002 | - | - | 390 |
| Comparative Example | 23 | 0.005 | 0.005 | 0.002 | 0.002 | 0.002 | 0.002 | - | - | 300 |
| | 24 | 0.003 | 0.005 | 0.002 | 0.002 | 0.002 | 0.002 | - | - | 470 |
| | 25 | 0.004 | 0.006 | 0.002 | 0.002 | 0.002 | 0.002 | - | - | 460 |
| | 26 | 0.006 | 0.005 | 0.002 | 0.002 | 0.002 | 0.002 | - | - | 330 |
| | 27 | 0.006 | 0.005 | 0.002 | 0.002 | 0.002 | 0.002 | - | - | 340 |
| | 28 | 0.005 | 0.005 | 0.003 | 0.002 | 0.002 | 0.002 | - | - | 440 |
| | 29 | 0.006 | 0.005 | 0.002 | 0.003 | 0.002 | 0.002 | - | - | 290 |
| | 30 | 0.006 | 0.012 | 0.002 | 0.002 | 0.002 | 0.003 | - | - | 330 |
| | 31 | 0.004 | 0.005 | 0.011 | 0.002 | 0.002 | 0.003 | - | - | 350 |
| | 32 | 0.006 | 0.005 | 0.002 | 0.011 | 0.002 | 0.003 | - | - | 330 |
| | 33 | 0.006 | 0.006 | 0.002 | 0.002 | 0.011 | 0.003 | - | - | 320 |
| | 34 | 0.005 | 0.005 | 0.002 | 0.002 | 0.002 | 0.011 | - | - | 340 |

**[Table 8]**

| | | Fine-grain proportion | welding usability | Hot-cracking resistance | Cold-cracking resistance | SR-cracking resistance |
|---|---|---|---|---|---|---|
| | 1 | 75 | Good | Good | Good | Good |
| | 2 | 97 | Good | Good | Good | Good |
| | 3 | 92 | Good | Good | Good | Good |
| | 4 | 100 | Good | Good | Good | Good |
| | 5 | 96 | Good | Good | Good | Good |
| | 6 | 100 | Good | Good | Good | Good |
| | 7 | 98 | Good | Good | Good | Good |
| Example | 8 | 98 | Good | Good | Good | Good |
| | 9 | 97 | Good | Good | Good | Good |
| | 10 | 100 | Good | Good | Good | Good |
| | 11 | 94 | Good | Good | Good | Good |
| | 12 | 99 | Good | Good | Good | Good |
| | 13 | 100 | Good | Good | Good | Good |
| | 14 | 81 | Good | Good | Good | Good |
| | 15 | 83 | Good | Good | Good | Good |
| | 16 | 72 | Good | Good | Good | Good |
| | 17 | 97 | Good | Good | Good | Poor |
| | 18 | 95 | Good | Good | Good | Poor |
| | 19 | 55 | Good | Good | Good | - |
| | 20 | 100 | Poor | Good | Good | - |
| | 21 | 73 | Good | Good | Good | - |
| | 22 | 97 | Good | Good | Good | - |
| Comparative Example | 23 | 91 | Good | Good | Good | - |
| | 24 | 100 | Poor | Good | Good | - |
| | 25 | 100 | Poor | Good | Good | - |
| | 26 | 100 | Good | Good | Good | Good |
| | 27 | 98 | Good | Good | Good | - |
| | 28 | 100 | Good | Good | Good | Good |
| | 29 | 83 | Good | Good | Good | - |
| | 30 | 98 | Good | Good | Good | Poor |
| | 31 | 100 | Good | Good | Good | Poor |
| | 32 | 99 | Good | Good | Good | Poor |
| | 33 | 97 | Good | Good | Good | Poor |
| | 34 | 98 | Good | Good | Good | Poor |

**[Table 9]**

| Group | No. | Tensile strength (MPa) | | vE-30°C (55 J or more on average, 46 J or more for each measured value) | | | | | | | Temper embrittlement property vTr55 + 3.0 ΔvTr55 | 540°C × 210 MPa Creep rupture time (h) |
|---|---|---|---|---|---|---|---|---|---|---|---|---|
| | | Room Temperature | 454°C | 1 | 2 | 3 | 4 | 5 | 6 | Average | | |
| | 1 | 640 | 503 | 60 | 85 | 90 | 87 | 58 | 90 | 78.3 | -4 | 1103 |
| | 2 | 656 | 512 | 57 | 80 | 90 | 59 | 85 | 87 | 76.3 | -12 | 1010 |
| | 3 | 681 | 528 | 60 | 91 | 83 | 78 | 92 | 84 | 81.3 | -9 | 1086 |
| | 4 | 622 | 493 | 60 | 61 | 57 | 70 | 65 | 63 | 62.7 | -11 | 1007 |
| | 5 | 675 | 532 | 71 | 67 | 59 | 64 | 65 | 69 | 65.8 | -10 | 2000 |
| | 6 | 635 | 498 | 58 | 61 | 65 | 63 | 62 | 67 | 62.7 | -11 | 1113 |
| | 7 | 609 | 481 | 61 | 63 | 67 | 64 | 65 | 64 | 64 | -20 | 1034 |
| Example | 8 | 620 | 491 | 65 | 80 | 77 | 75 | 72 | 76 | 74.2 | -21 | 998 |
| | 9 | 652 | 507 | 75 | 62 | 61 | 78 | 74 | 79 | 71.5 | -18 | 2000 |
| | 10 | 621 | 487 | 72 | 86 | 73 | 75 | 74 | 73 | 75.5 | -13 | 978 |
| | 11 | 678 | 521 | 60 | 57 | 62 | 61 | 59 | 64 | 60.5 | -8 | 2000 |
| | 12 | 648 | 519 | 78 | 81 | 65 | 72 | 75 | 69 | 73.3 | -24 | 2000 |
| | 13 | 642 | 517 | 80 | 92 | 85 | 78 | 87 | 84 | 84.3 | -31 | 2000 |
| | 14 | 629 | 497 | 56 | 58 | 56 | 57 | 50 | 57 | 55.7 | -28 | 2000 |
| | 15 | 635 | 502 | 65 | 57 | 62 | 58 | 59 | 51 | 58.7 | -26 | 2000 |
| | 16 | 604 | 478 | 58 | 49 | 55 | 66 | 47 | 58 | 55.5 | -34 | 967 |
| Comparative Example | 17 | - | - | - | - | - | - | - | Test aborted due to occurrence of SR cracking | | | |
| | 18 | - | - | - | - | - | - | - | Test aborted due to occurrence of SR cracking | | | |
| | 19 | - | - | 15 | 80 | 84 | 17 | 67 | 72 | 55.8 | Unstable toughness due to low [O] | |
| | 20 | - | - | 11 | 24 | 15 | 17 | 15 | 14 | 16 | - | - |
| | 21 | - | - | 13 | 35 | 42 | 27 | 38 | 132 | 31.2 | - | - |
| | 22 | - | - | 53 | 42 | 54 | 54 | 57 | 61 | 53.5 | - | - |
| | 23 | - | - | 12 | 35 | 56 | 48 | 52 | 49 | 42 | - | - |
| | 24 | - | - | 21 | 18 | 34 | 26 | 17 | 23 | 23.2 | - | - |
| | 25 | - | - | 31 | 19 | 24 | 26 | 29 | 25 | 25.7 | - | - |
| | 26 | 612 | 485 | 70 | 74 | 65 | 81 | 68 | 72 | 71.7 | -24 | 713 |
| | 27 | - | - | 60 | 52 | 51 | 54 | 51 | 57 | 54.2 | - | - |
| | 28 | 619 | 490 | 68 | 76 | 74 | 73 | 80 | 71 | 73.7 | -16 | 826 |
| | 29 | - | - | 31 | 58 | 59 | 53 | 56 | 58 | 52.5 | - | - |
| | 30 | - | - | - | - | - | - | - | Test aborted due to occurrence of SR cracking | | | |
| | 31 | - | - | - | - | - | - | - | Test aborted due to occurrence of SR cracking | | | |
| | 32 | - | - | - | - | - | - | - | Test aborted due to occurrence of SR cracking | | | |
| | 33 | - | - | - | - | - | - | - | Test aborted due to occurrence of SR cracking | | | |
| | 34 | - | - | - | - | - | - | - | Test aborted due to occurrence of SR cracking | | | |

As described in Tables 6 to 9, in Examples 1 to 13, since the layer thickness during welding, chemical components of the weld metal, and fine-grain proportion in a microstructure fell within the ranges specified in the present invention, the toughness was stable at a high value. In Examples 14 and 15, since the welding heat input was excessively small, the weld bead was prevented from spreading and the width-to-penetration ratio was small. As a result, the reheating effect caused by the following layer was insufficient and the fine-grain proportion was below the range specified in the present invention. Thus, although the toughness was evaluated as "Good", the toughness had a value close to the specified value.

In Example 16, the excessively high welding heat input resulted in an excessively thick bead. As a result, the reheating effect caused by the following layer was reduced and the fine-grain proportion was just above the lower limit of the present invention. Thus, although the toughness was evaluated as "Good", it was close to the specified value.

In Comparative Examples 17 and 18, since the contents of Bi and Pb of the weld metal exceeded the upper limit specified in the present invention, cracking occurred during SR. Consequently, the subsequent test could not be performed. In Comparative Example 19, since the contents of Si and Mn of the weld metal exceeded the upper limit specified in the present invention, the deoxidation was found to be excessively proceeded. Consequently, the O content of the weld metal fell below the lower limit specified in the present invention and the fine-grain proportion failed to exceed the lower limit specified in the present invention. Although the toughness was good on average, some test pieces had a significantly low value. Thus, an evaluation of "Poor" was given. In Comparative Example 20, since the O content of the weld metal exceeded the upper limit specified in the present invention, the toughness significantly decreased. Thus, an evaluation of "Poor" was given. In Comparative Example 21, since the Al content of the weld metal exceeded the upper limit specified in the present invention, the toughness rapidly decreased.

In Comparative Example 22, since the C content of the weld metal was less than the lower limit specified in the present invention, sufficient toughness could not be obtained. In Comparative Example 23, since the C content of the weld metal exceeded the upper limit specified in the present invention, the toughness rapidly decreased. In Comparative Example 24, since the Si content of the weld metal was less than the lower limit specified in the present invention, there was insufficient deoxidation and consequently the O content that remained in the weld metal increased and exceeded the upper limit specified in the present invention, which resulted in a significant reduction in toughness. In Comparative Example 25, since the Mn content of the weld metal was less than the lower limit specified in the present invention, there was insufficient deoxidation and consequently the O content that remained in the weld metal increased and exceeded the upper limit specified in the present invention, which resulted in a significant reduction in toughness. In Comparative Example 26, since the V content of the weld metal was less than the lower limit specified in the present invention, the strength was low and the creep rupture time was evaluated as "Poor". In Comparative Example 27, since the V content of the weld metal exceeded the upper limit specified in the present invention, the toughness was low, which presumably resulted from an excessively high strength.

In Comparative Example 28, since the Nb content of the weld metal was less than the lower limit specified in the present invention, the strength was low and the creep rupture strength was evaluated as "Poor". In Comparative Example 29, since the Nb content of the weld metal exceeded the upper limit specified in the present invention, the toughness was low, which presumably resulted from an excessively high strength. In Comparative Examples 30 to 34, since the total content of P, S, Sn, Sb, and As of the weld metal exceeded the upper limit specified in the present invention, cracking occurred during SR and the subsequent test could not be performed.

### Reference Signs List

- 1: material to be welded
- 2: backing material

## Claims

1. A weld metal obtained by performing submerged arc welding, the weld metal having a composition consisting of:
C: 0.05% to 0.15% by mass;
Si: 0.10% to 0.25% by mass;
Mn: 0.50% to 1.30% by mass;
Cr: 2.00% to 3.25% by mass;
Mo: 0.90% to 1.20% by mass;
V: 0.20% to 0.40% by mass;
Nb: 0.010% to 0.040% by mass;
O: 250 to 450 ppm;
Al: 0.040% by mass or less;
P: 0.010% by mass or less;
S, Sn, Sb, and As: each 0.010% by mass or less; and
Bi and Pb: each 1.0 ppm or less,
with the balance being Fe and inevitable impurities,
wherein, in a microstructure, a ratio of crystal grains with a particle surface area of 400 µm² or less relative to all crystal grains is 70% or more.

2. A submerged arc welding method for forming a weld metal according to claim 1, the method comprising:
performing submerged arc welding using a welding wire in combination with a flux under the following welding conditions: an amount of welding heat input controlled to be in the range of 20 to 50 kJ/cm and a build-up thickness (mm) per layer controlled to be 0.15 times or less the amount of heat input (kJ/cm),
wherein the welding wire has a composition consisting of
C: 0.09% to 0.19% by mass,
Si: 0.30% by mass or less,
Mn: 0.50% to 1.40% by mass,
Cr: 2.00% to 3.80% by mass,
Mo: 0.90% to 1.20% by mass,
V: 0.25% to 0.45% by mass, and
Nb: 0.010% to 0.040% by mass,
with the balance being Fe and inevitable impurities, and the flux contains a carbonate in an amount of 3.0% to 12.0% by mass in terms of CO₂.

## Patentansprüche

1. Schweißmetall, erhalten unter Durchführen von Unterpulverschweißen, wobei das Schweißmetall eine Zusammensetzung aufweist, bestehend aus:
C: 0,05% bis 0,15%, bezogen auf die Masse,
Si: 0,10% bis 0,25%, bezogen auf die Masse,
Mn: 0,50% bis 1,30%, bezogen auf die Masse,
Cr: 2,00% bis 3,25%, bezogen auf die Masse,
Mo: 0,90% bis 1,20%, bezogen auf die Masse,
V: 0,20% bis 0,40%, bezogen auf die Masse,
Nb: 0,010% bis 0,040%, bezogen auf die Masse,
O: 250 bis 450 ppm,
Al: 0,040%, bezogen auf die Masse, oder weniger,
P: 0,010%, bezogen auf die Masse, oder weniger,
S, Sn, Sb und As: jeweils 0,010%, bezogen auf die Masse, oder weniger,
Bi und Pb: jeweils 1,0 ppm oder weniger,
wobei der Rest Fe und unvermeidbare Verunreinigungen sind,
wobei in einer Mikrostruktur ein Verhältnis von Kristallkörnern mit einem Teilchenoberflächenbereich von 400 µm² oder weniger relativ zu sämtlichen Kristallkörnern 70% oder mehr beträgt.

2. Unterpulverschweißverfahren zum Bilden eines Schweißmetalls gemäß Anspruch 1, wobei das Verfahren umfaßt:
das Durchführen von Unterpulverschweißen unter Verwendung eines Schweißdrahts in Kombination mit einem Flußmittel unter den folgenden Schweißbedingungen: einer Menge an Schweißwärmeeintrag kontrolliert in dem Bereich von 20 bis 50 kJ/cm zu sein und einer Aufbaudicke (mm) pro Schicht kontrolliert das 0,15-fache oder weniger der Menge des Wärmeeintrags (kJ/cm) zu sein,
wobei der Schweißdraht eine Zusammensetzung aufweist, bestehend aus
C: 0,09% bis 0,19%, bezogen auf die Masse,
Si: 0,30%, bezogen auf die Masse, oder weniger,
Mn: 0,50% bis 1,40%, bezogen auf die Masse,
Cr: 2,00% bis 3,80%, bezogen auf die Masse,
Mo: 0,90% bis 1,20%, bezogen auf die Masse,
V: 0,25% bis 0,45%, bezogen auf die Masse,
Nb: 0,010% bis 0,040%, bezogen auf die Masse,
wobei der Rest Fe und unvermeidbare Verunreinigungen sind, und das Flußmittel ein Carbonat in einer Menge von 3,0% bis 12,0%, bezogen auf die Masse, bezogen auf CO₂, enthält.

## Revendications

1. Métal de soudure obtenu en effectuant un soudage à l'arc submergé, le métal de soudure ayant une composition consistant en :
C : 0,05% à 0,15% en masse ;
Si : 0,10% à 0,25% en masse ;
Mn : 0,50% à 1,30% en masse ;
Cr : 2,00% à 3,25% en masse ;
Mo : 0,90% à 1,20% en masse ;
V : 0,20% à 0,40% en masse ;
Nb : 0,010% à 0,040% en masse ;
O : 250 à 450 ppm ;
Al : 0,040% en masse ou moins ;
P : 0,010% en masse ou moins ;
S, Sn, Sb et As : chacun 0,010% en masse ou moins ; et
Bi et Pb : chacun 1,0 ppm ou moins ;
le reste étant Fe et les impuretés inévitables,
où, dans une microstructure, le rapport des grains cristallins ayant une surface des particules de 400 µm² ou moins par rapport à tous les grains cristallins se situe à 70% ou plus.

2. Procédé de de soudage à l'arc submergé pour former un métal de soudure selon la revendication 1, le procédé comprenant :
la réalisation d'un soudage à l'arc submergé à l'aide d'un fil de soudage en association avec un flux dans les conditions de soudage suivantes : une quantité de chaleur de soudage introduite contrôlée dans l'intervalle allant de 20 à 50 kJ/cm et une épaisseur élaborée (mm) par couche contrôlée à 0,15 fois ou moins la quantité de chaleur introduite (kJ/cm), où le fil de soudage présente une composition consistant en :
C : 0,09% à 0,19% en masse ;
Si : 0,30% en masse ou moins ;
Mn : 0,50% à 1,40% en masse ;
Cr : 2,00% à 3,80% en masse ;
Mo : 0,90% à 1,20% en masse ;
V : 0,25% à 0,45% en masse ;
Nb : 0,010% à 0,040% en masse ;
le reste étant Fe et les impuretés inévitables, et le flux contient un carbonate en une quantité située dans l'intervalle allant de 3,0% à 12,0% en masse en termes de CO₂.
